(19) Europäisches Patentamt
European Patent Office
Office européen des brevets

(11) **EP 2 255 076 B1**

(12) **EUROPÄISCHE PATENTSCHRIFT**

(45) Veröffentlichungstag und Bekanntmachung des Hinweises auf die Patenterteilung:
**07.10.2015 Patentblatt 2015/41**

(21) Anmeldenummer: **09715736.6**

(22) Anmeldetag: **26.02.2009**

(51) Int Cl.:
*F01K 23/10* (2006.01)    *F22B 35/10* (2006.01)
*F22B 35/00* (2006.01)    *G05D 23/19* (2006.01)

(86) Internationale Anmeldenummer:
**PCT/EP2009/052279**

(87) Internationale Veröffentlichungsnummer:
**WO 2009/106563 (03.09.2009 Gazette 2009/36)**

(54) **VERFAHREN ZUR REGELUNG EINES DAMPFERZEUGERS UND REGELSCHALTUNG FÜR EINEN DAMPFERZEUGER**

METHOD FOR REGULATING A BOILER AND CONTROL CIRCUIT FOR A BOILER

PROCÉDÉ DE RÉGULATION D'UN GÉNÉRATEUR DE VAPEUR ET CIRCUIT DE RÉGULATION POUR GÉNÉRATEUR DE VAPEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **26.02.2008 CH 279082008**

(43) Veröffentlichungstag der Anmeldung:
**01.12.2010 Patentblatt 2010/48**

(73) Patentinhaber: **ALSTOM Technology Ltd**
**5400 Baden (CH)**

(72) Erfinder: **OLIA, Hamid**
**CH-8008 Zürich (CH)**

(74) Vertreter: **Alstom Technology Ltd**
**CHTI Intellectual Property**
**Brown Boveri Strasse 7**
**5400 Baden (CH)**

(56) Entgegenhaltungen:
**EP-A- 0 425 717    EP-A- 1 431 523**
**GB-A- 2 099 558    US-A- 3 260 246**
**US-A- 5 293 842    US-B1- 6 460 490**

EP 2 255 076 B1

**Beschreibung**

Technisches Gebiet

Die Erfindung betrifft ein Verfahren zur Regelung eines Abhitze-Dampferzeugers vom Typ eines Einrohrverdampfers oder Durchlaufverdampfers, insbesondere in Anwendung in einer Kombi-Kraftanlage, sowie eine Regelschaltung zur Regelung eines Abhitze-Dampferzeugers der genannten Art.

Stand der Technik

Kombikraftanlagen umfassen eine Gasturbine, eine Dampfturbine sowie einen Abgasdampferzeuger, in dem Speisewasser durch Wärmeaustausch mit heissem Abgas aus der Gasturbine und im Gegenstrom zum heissen Abgas verdampft und überhitzt wird und sodann der Dampfturbine als Frischdampf zugeführt wird. Ein Typ dieser Dampferzeuger, häufig auch "heat recovery steam generator" oder HRSG genannt, sind Einrohrdampferzeuger, auch als Durchlaufdampferzeuger oder "Once-through-evaporator" bekannt. Sie unterschieden sich von sogenannten Umlaufdampferzeugern, indem das zu verdampfende Wasser den Dampferzeuger im wesentlichen nur einmal durchströmt.
Solche Einrohrdampferzeuger sind beispielsweise in WO2006/107315, insbesondere Horizontal-Einrohrdampferzeuger offenbart. Einrohrdampferzeuger zeichnen sich insbesondere dadurch aus, dass die Temperatur des Abgases aus der Gasturbine vom Eintritt zum Austritt des Dampferzeugers stetig abnimmt und die Wärme die in jeder Rohrreihe, über die das Abgas strömt, proportional zur Temperaturdifferenz ist zwischen dem Abgas und dem Fluid in den Wärmetauscherrohren. Dadurch ergibt sich in Richtung der Abgasströmung einen stetig abnehmenden Wärmefluss. WO2006/107315 offenbart eine spezifische Bauweise der Rohrbündel und Sammler diskutiert, wobei diese insbesondere den Materialbelastungen durch häufiges An- und Herunterfahren der Kraftanlage standhalten würde.
WO2002/101292 offenbart einen weiteren Dampferzeuger der Art des Durchlaufverdampfers, in dem zwecks erhöhter mechanischer Stabilität und thermischer Belastbarkeit die Durchlaufheizflächen vertikal angeordnete Fall- und Steigrohrstücken aufweisen.
EP 425717 offenbart einen Einrohrdampferzeuger mit einer Regelung des Strömungsvolumens des Speisewassers durch einen Hochdruckverdampfer mittels eines Ventils, wobei die Regelung gemäß einer gemessenen Dampftemperatur in einem Austrittssammler am Ende eines Überhitzers durchgeführt wird.
US5,293,842 offenbart einen Durchlaufdampferzeuger für den Betrieb bei allen Betriebszuständen einer Gas- und Dampfturbine einer Kombianlage, wobei Speisewasser zunächst vorgewärmt und sodann verdampft wird, wobei das vorgewärmte Wasser, das unter hohem Druck steht, durch Wärmetausch mit einem Kondensat-Partialstrom gekühlt wird. Die Kühlung wird insbesondere während einem Teillastbetrieb der Kraftanlage angewendet.
US3,260,246 offenbart einen Boiler oder Dampfgenerator mit einem Vorwärmer (economizer), einem Vor-Dampfüberhitzer (pre-superheater) und einem Dampfüberhitzer (superheater), bei dem die Speisewasserzufuhr als Funktion einer gemessenen Enthalpie des Dampfes zwischen Vorüberhitzer und Überhitzer geregelt wird.

Darstellung der Erfindung

Der vorliegenden Erfindung ist die Aufgabe gestellt, ein Verfahren zur Regelung eines Einrohrverdampfers bereit zu stellen, der in einem Abgasdampferzeuger einer Kombikraftanlage mit einer Gas- und einer Dampfturbine angewendet wird. Insbesondere soll das Regelungsverfahren das Erreichen einer Dampftemperatur gemäss jedem Betriebszustand der Dampfturbine und Gasturbine gewährleisten. Eine weitere Aufgabe der Erfindung ist die Bereitstellung einer Regelschaltung zur Regelung eines Durchlaufdampferzeugers oder Einrohrdampferzeugers, der in einer Kombi-Kraftanlage integriert ist.
Das erfindungsgemäße Verfahren wird ausschließlich durch den unabhängigen Anspruch 1 definiert. Die erfindungsgemäße Regelschaltung wird ausschließlich durch den unabhängigen Anspruch 10 definiert.
Gemäss dem erfindungsgemässen Verfahren zur Regelung eines Einrohrverdampfers in einer Kombi-Kraftanlage, der einen Hochdruck-Economizer oder Speisewasservorwärmer, einen Hochdruck-Verdampfer und mindestens einen Überhitzer aufweist, wird eine Ventilöffnung zur Regulierung des Strömungsvolumens in einer Speisewasser-Zufuhrleitung in den Hochdruck-Verdampfer in Abhängigkeit eines Temperatursollwerts für den Dampf für die Dampfturbine sowie einer gemessenen Dampftemperatur am Austritt des Überhitzers in Serie geregelt. Das Verfahren wird mittels mehreren Regelungsstufen durchgeführt, wobei bei den Regelungsstufen die gemessene Dampftemperatur am Austritt des Überhitzers, ein Überhitzungsgrad am Austritt des Hochdruckverdampfers und ein Unterkühlungsgrad des Speisewassers am Eintritt in den Hochdruckverdampfer miteinbezogen wird.
Das erfindungsgemässe Verfahren eignet sich für alle Betriebszustände der Kombikraftanlage, d.h. sowohl für während des Hoch- und Herunterfahrens als auch des Stationärbetriebs der Anlage.
Es stellt insbesondere für alle Betriebszustände der Kombikraftanlage vorbestimmte, optimale Überhitzung des Dampfes am Austritt des Hochdruckverdampfers sicher. Zudem gewährleistet es eine ausreichende Unterkühlung des Speisewassers am Eintritt des Hochdruckverdampfers für einen optimalen Betrieb des Hochdruckverdampfers sowie einen Minimalfluss des Speisewassers in den Hochdruckverdampfer.

Ein Einrohr-Verdampfer kann verschiedene Anordnungen von Rohrbündeln aufweisen, die sich zum Beispiel in der Anzahl parallel angeordneter Rohre oder in der Anzahl von in Serie angeordneten Rohrbündeln oder in der Bauweise und Anordnung der einzelnen Wärmetauschrohre unterscheiden. Das erfindungsgemässe Regelungsverfahren eignet sich für jeden Typ von Einrohrverdampfern, ungeachtet der Anordnung der Rohrbündel.

Das Verfahren zur Regelung eines Einrohrverdampfers in einer Kombi-Kraftanlage, der einen Hochdruck-Economizer, einen Hochdruck-Verdampfer und mindestens einen Überhitzer aufweist, umfasst folgende Schritte:

- Messung der Dampftemperatur am Austritt des Überhitzers,
- in einer ersten Regelstufe, Vergleich der Dampftemperatur mit einem Sollwert für die Turbinendampftemperatur gemäss einem Betriebszustand der Dampfturbine,
- Bestimmung eines Sollwerts für den Überhitzungsgrad am Austritt des Hochdruck-Verdampfers aufgrund der Differenz zwischen dem Messwert und Sollwert der Dampftemperatur am Austritt des Überhitzers,
- Messung des aktuellen Überhitzungsgrads am Austritt des Hochdruck-Verdampfers,
- in einer zweiten Regelstufe, Bestimmung eines Sollwerts für den Unterkühlungsgrad des Wassers am Eintritt zum Hochdruck-Verdampfer aufgrund der Differenz zwischen dem Sollwert und aktuellen Messwert des Überhitzungsgrads am Austritt des Hochdruck-Verdampfers,
- Messung des aktuellen Unterkühlungsgrads des Speisewassers am Eintritt in den Hochdruck-Verdampfer,
- in einer dritten Regelstufe, Bestimmung eines Sollwerts für das Strömungsvolumen für das Speisewasser am Eintritt in den Hochdruck-Verdampfer aufgrund der Differenz zwischen dem Sollwert für den Unterkühlungsgrad und dem aktuellen gemessenen Unterkühlungsgrad,
- aufgrund des Sollwerts für das Strömungsvolumen des Speisewassers, Generierung und Übermittlung eines Regelsignals für die Öffnung eines Ventils in der Speisewasserzufuhrleitung.

In einer weiteren Ausführung des erfindungsgemässen Verfahrens werden zusätzlich nach der Bestimmung eines Sollwerts für das Strömungsvolumen des Speisewassers, folgende Schritte durchgeführt:

- Messung des aktuellen Strömungsvolumens des Speisewassers in den Hochdruck-Verdampfer,
- in einer vierten Regelstufe, Bestimmung einer Ventilöffnungsposition in einer Speisewasserzufuhrleitung vor dem Eintritt in den Hochdruck-Verdampfer aufgrund der Differenz zwischen dem Sollwert für das Strömungsvolumen des Speisewassers und dem aktuellen, gemessenen Strömungsvolumen,
- Übermittlung eines Regelsignals für die Öffnung des Ventils in der Speisewasserzufuhrleitung.

In diesen Ausführungen des Verfahrens stellt die dritte Regelstufe sicher, dass während dem Normalbetrieb sowie auch bei langsamen Laständerungen der Kombi-Kraftanlage und des Einrohrverdampfers das Strömungsmedium am Eintritt des Hochdruck-Verdampfers genügend unterkühlt ist. Insbesondere stellt die Unterkühlungsregelung durch die dritte Regelstufe sicher, dass eine Verdampfung am Eintritt der Verdampferrohre des Hochdruck-Verdampfers vermieden wird. Eine solche Verdampfung würde sonst einen geringen Massenstrom durch diese Verdampferrohre verursachen, was zu einer Überhitzung der Rohre und einer unstabilen Strömung durch den gesamten Verdampfer mit entsprechendem Schaden-Risiko führen würde. Die dritte Regelstufe gewährleistet deshalb eine stabile Strömung durch den Verdampfer und damit einen sicheren Betrieb bei reduziertem Schadenrisiko.

Bei schnellen Laständerungen der Kombi-Kraftanlage und des Einrohrverdampfers und insbesondere bei rapidem Ablasten der Anlage ergibt sich jedoch eine neue Problemstellung. Bei solchen Betriebssituationen senkt sich der Druck innerhalb des Verdampfers und damit auch die Sättigungstemperatur auf ein Niveau unterhalb der Temperatur des Strömungsmediums am Austritt des Speisewasservorwärmers (oder Hochdruck-Economizers). Bei einem solchen instationären Betriebszustand kann die Unterkühlung des Strömungsmediums am Eintritt des Hochdruck-Verdampfers durch den Unterkühlungsregler in der dritten Regelstufe nicht mehr sichergestellt werden.

Erst nach Ablauf eines solchen Betriebszustandes stellt sich die Temperatur des Strömungsmediums am Austritt des Speisewasservorwärmers (Hochdruck-Economizer) wieder auf einem Niveau unter der Sättigungstemperatur, womit die Unterkühlungsregelung der dritten Regelstufe wieder wirksam werden kann.

Bei einem bevorzugten Betrieb des Einrohrverdampfers sollte die Temperatur des Strömungsmediums am Austritt des Speisewasservorwärmers nicht über längere Zeit unterhalb des vorgegebenen Sollwerts liegen, denn sonst würde die Unterkühlungsregelung zu einer Überspeisung des Hochdruck-Verdampfers und damit zu einer Reduktion der Dampfproduktion führen.

Für diese erwähnten speziellen Betriebssituationen, insbesondere bei schnellem Ablasten der Anlage, und die damit verbundenen Probleme gewährt eine weitere Ausführung des erfindungsgemässen Verfahrens Abhilfe. In dieser Ausführung wird zusätzlich zur Unterkühlungsregelung des Hochdruck-Verdampfers durch die dritte Regelstufe die Unterkühlung des Strömungsmediums am Eintritt in den Hochdruck-Verdampfer mit einem Sollwert leicht unter dem Mindestsollwert der dritten Regelstufe geregelt. Hierzu wird eine Öffnung eines Ventils in einer Bypassleitung für das Speisewasser um den Speisewasservorwärmer geregelt, wobei die Bypassleitung vom Speisewasserpumpenaustritt zur Speisewasserleitung nach dem Economizer und vor dem Eintritt des Hochdruckverdampfer führt. Das Verfahren enthält den zusätzlichen Verfahrensschritt:

- Bestimmung eines Soll-Strömungsvolumens durch eine Bypassleitung zwischen dem Austritt der Speisewasserpumpe der Kombi-Kraftanlage und dem Eintritt des Hochdruck-Verdampfers aufgrund der Differenz zwischen dem aktuellen Messwert des Unterkühlungsgrads am Eintritt des Hochdruck-Verdampfers und einem Mindestsollwert für die Unterkühlung kleiner als der Mindestsollwert für die Unterkühlung in der dritten Regelstufe;
- aufgrund des Sollwerts für das Strömungsvolumen durch die Bypassleitung, Generierung und Übermittlung eines Regelsignals für die Position eines Ventils in der Bypassleitung.

In einer weiteren Ausführung enthält das Verfahren den zusätzlichen Verfahrensschritt:

- Bestimmung des aktuellen Strömungsvolumens in der Bypassleitung;
- Generierung eines Regelsignals für die Öffnungsposition eines Ventils in der Bypassleitung aufgrund des Soll-Strömungsvolumens und einem aktuellen Strömungsvolumen durch die Bypassleitung;
- Übermittlung eines Regelsignals für die Position des Ventils in der Bypassleitung.

Eine Regelschaltung zur Regelung eines Einrohrdampferzeugers oder Durchlaufdampferzeugers in einer Kombi-Kraftanlage mit einer Gasturbine und einer Dampfturbine, wobei der Einrohr-Dampferzeuger einen Hochdruck-Economizer, einen Hochdruck-Verdampfer und mindestens einen Überhitzer aufweist, weist folgende Elemente auf:

- eine Vorrichtung zur Eingabe eines Sollwerts für eine gewünschte Turbinendampftemperatur sowie eine Messvorrichtung zur Messung der Dampftemperatur am Austritt eines Dampfüberhitzers des Dampferzeugers,
- eine Vorrichtung zur Messung und Berechnung des Dampfüberhitzungsgrads am Austritt des Hochdruckverdampfers des Dampferzeugers,
- eine Vorrichtung zur Messung und Berechnung des Unterkühlungsgrads am Eintritt in den Hochdruckverdampfer,
- mindestens drei Regelbausteine, die in Serie geschaltet sind,
- Signalleitungen zur Übermittlung der Messwerte der Dampftemperatur am Austritt des mindestens einen Überhitzers, der Werte des Dampfüberhitzungsgrads am Austritt aus dem Hochdruckverdampfer und der Werte des Unterkühlungsgrads des Speisewassers am Eintritt in den Hochdruckverdampfer an die Regelbausteine,
- eine Regelsignalleitung zur Übermittlung eines Regelsignals vom letzten in Serie geschalteten Regelbaustein an ein Ventil in der Zufuhrleitung für das Speisewasser in den Hochdruckverdampfer.

Eine weitere, zweite Ausführung der erfindungsgemässen Regelschaltung umfasst zusätzlich:

- eine Messvorrichtung zur Messung des Strömungsvolumens des Speisewassers in den Hochdruck-Verdampfer,
- einen zusätzlichen, vierten Regelbaustein, der mit den drei Regelbausteinen in Serie geschaltet ist und von dem die Regelsignalleitung an das Ventil in der Speisewasserzufuhrleitung führt.

Die erste und zweite Ausführung der Regelschaltung, sowie die erste und zweite Ausführung des erfindungsgemässen Verfahrens gewährleisten, dass ein Minimalvolumen für das Speisewasser in den Hochdruckverdampfer gelangt und der Hochdruck-Verdampfer stabil bei minimiertem Risiko thermisch bedingter Materialschäden funktionieren kann. Zudem gewährleistet sie auch im Fall von Ventilfehlverhaltens eine sichere Funktion des Hochdruckverdampfers.
Eine weitere, dritte Ausführung der erfindungsgemässen Regelschaltung umfasst zusätzlich, zwecks Realisierung des Verfahrens gemäss der dritten Ausführung des Verfahrens,

- einen zusätzlichen Regelbaustein zur Bestimmung eines Soll-Strömungsvolumens durch eine Bypassleitung zwischen einer Speisewasserpumpe der Kombi-Kraftanlage und dem Eintritt in den Hochdruck-Verdampfer es Einrohrverdampfers;
- eine Signalleitung zur Übermittlung des aktuellen, gemessenen Unterkühlungsgrad am Eintritt zum Hochdruck-Verdampfer an den zusätzlichen Regelbaustein;
- eine Signalleitung zur Übermittlung eines Ventilregelsignals an das Ventil in der Bypassleitung.

Eine weitere, vierte Ausführung der Regelschaltung weist zusätzlich zur dritten Ausführung

- einen weiteren Regelbaustein auf, der in Serie mit dem Regelbaustein zur Bestimmung des Soll-Strömungsvolumens durch die Bypassleitung geschaltet ist;
- eine Signalleitung zur Übermittlung des Sollwerts für das Strömungsvolumen durch die Bypassleitung an diesen weiteren Regelbaustein;
- eine Signalleitung zur Übermittlung eines aktuellen Wertes für das Strömungsvolumen an diesen weiteren Regelbaustein.

Für die Regelbausteine zur Generierung der Sollwerte werden beispielsweise Proportional-Integrator-Differentiator-Regelbausteine, auch kurz PID-Bausteine genannt, eingesetzt. Andere Bausteine, wie zum Beispiel Zustandsregler mit Beobachter, sind für die vorgegebene Funktion gleichsam anwendbar.

Kurze Beschreibung der Zeichnungen

Es zeigt

Figur 1 eine schematische Darstellung eines Abgasdampferzeugers vom Typ eines Einrohr-Dampferzeugers für eine Kombi-Kraftanlage sowie einer Regelschaltung zur Regelung des Dampferzeugers gemäss der zweiten Ausführung der Schaltung,
Figur 2 eine schematische Darstellung eines Abgasdampferzeugers wie in Figur 1 mit einer Regelschaltung zur Regelung des Dampferzeugers gemäss der vierten Ausführung der Schaltung.

Ausführung der Erfindung

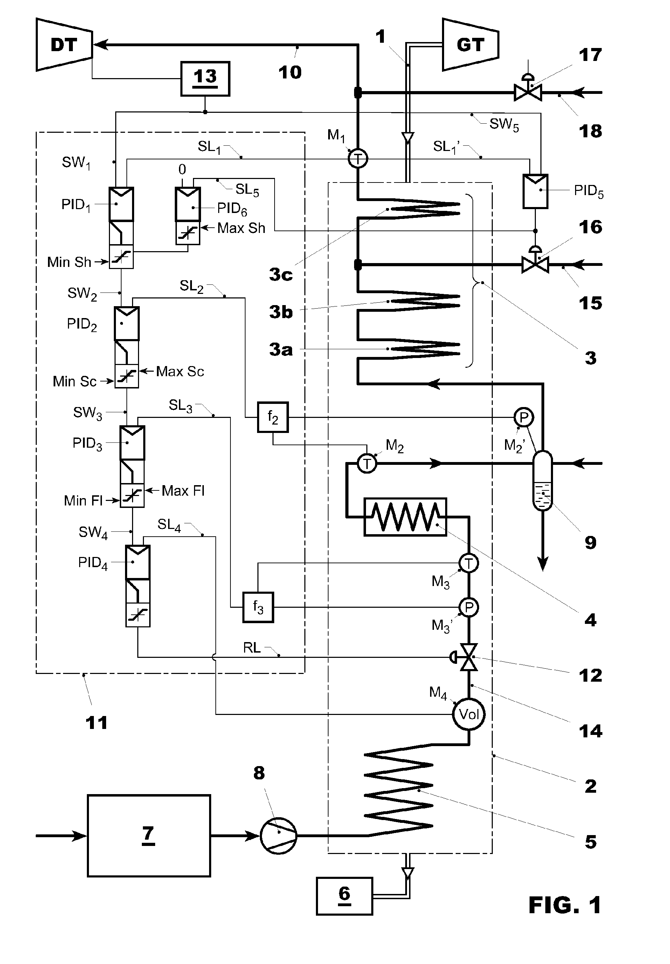

Figur 1 zeigt schematisch die für die Erfindung wesentlichen Elemente einer Gas-Dampf-Kombikraftanlage, insbesondere eine Gasturbine GT, von der heisse Abgase über eine Abgasleitung 1 in einen Abgasdampferzeuger 2 zugeführt werden. Der Dampferzeuger besteht aus einem Einrohr-Dampferzeuger oder Durchlaufdampferzeuger mit einem mehreren Hochdrucküberhitzer 3, einem Hochdruck (HD)-Verdampfer 4 und einem oder mehreren Hochdruck (HD)-Economizer 5 (, wobei diese Elemente in der Reihenfolge der Abgasströmung genannt sind). Vom Dampferzeuger 2 führt zwecks dem Austritt des Abgases eine Leitung zu einem Kamin 6. Speisewasserseitig ist ein Speisewassertank 7 gezeigt von dem über eine Speisewasserpumpe 8 dem HD-Economizer 5 Speisewasser zur Erwärmung zugeführt wird. Das Speisewasser wird nach Austritt aus dem HD-Economizer 5 dem HD-Verdampfer 4 zugeführt, in dem es zur Verdampfung gebracht wird. Eine Dampfleitung führt vom HD-Verdampfer 4 zunächst in einen Separator 9, in dem insbesondere während einer Anfahrphase der Anlage, Wasser abgeschieden wird. Vom Separator 9 führt die Dampfleitung schliesslich in die erste von mehreren Stufen 3a, 3b, 3c des Hochdruck-Überhitzers 3. Nach Austritt aus der letzten Stufe 3c wird der überhitzte Dampf über eine Frischdampfleitung 10 einer Dampfturbine DT zugeführt.

Der Dampferzeuger 2 ist in der Figur schematisch vertikal dargestellt. Das erfindungsgemässe Verfahren eignet sich für Durchlaufdampferzeuger, durch die das Abgas aus der Gasturbine im wesentlichen in horizontaler oder in vertikaler Richtung durchströmt.

Eine Regelschaltung 11 zur Regelung eines Dampferzeugers 2 weist ein Temperaturmessgerät M1 zur Messung der Dampftemperatur am Austritt des Dampfüberhitzers 3 sowie eine Vorrichtung 13 zur automatischen oder manuellen Eingabe eines Sollwerts für die Dampftemperatur in der Turbine DT, die für einen gegebenen Dampfturbinenbetrieb notwendig ist. Der Temperaturwert aus dem Messgerät M1 und der Sollwert für die Turbinendampftemperatur werden über Signalleitungen SL1 bzw. SW1 einem Proportional-Integrator-Differentiator-Regelbaustein (PID-Baustein) PID1 zugeführt. Der PID1 bestimmt aufgrund der Differenz zwischen dem Sollwert für die Dampftemperatur für die Dampfturbine und dem Messwert der Dampftemperatur am Austritt des Dampfüberhitzers 3 einen Sollwert für den Überhitzungsgrad des Dampfes am Austritt aus dem HD-Verdampfer 4, der über eine Signalleitung SW2 einem zweiten PID-Baustein PID2 zugeleitet wird. Am Austritt des HD-Verdampfers 4 ist eine Vorrichtung zur Messung und Berechnung des Überhitzungsgrads angeordnet, wobei diese aus einem Temperaturmessgerät M2, einem Druckmessgerät am Separator 9 und einem Rechenbaustein besteht. Die Messwerte werden dem Rechenbaustein f2 zugeleitet zur Berechnung des aktuellen Überhitzungsgrads in Berücksichtigung der vorherrschenden Sättigungstemperatur. Der berechnete Überhitzungsgrad aus dem Baustein f2 wird über eine Signalleitung SL2 dem PID2 zugeleitet, der aufgrund der Differenz zwischen dem aktuellen Überhitzungsgrad und dem Sollwert für den Überhitzungsgrad einen weiteren Sollwert für den Unterkühlungsgrad des Speisewassers am Eintritt zum HD-Verdampfer 4 generiert. Dieser Unterkühlungssollwert wird über Leitung SW3 einem dritten PID-Baustein PID3 zugeführt. Zur Feststellung des Unterkühlungsgrads des Speisewassers ist in der Zufuhrleitung 14 zum HD-Verdampfer 4 eine Vorrichtung zur Messung und Berechnung des Unterkühlungsgrads angeordnet bestehend aus einem Messgerät M3 zur Messung der Temperatur des Speisewassers, einem Druckmessgerät M3'und einem Rechenbaustein f3. Die Messwerte aus den Geräten M3 und M3' werden wiederum dem Rechenbaustein f3 zugeführt zur Berechnung des Unterkühlungsgrad unter Berücksichtigung der Sättigungstemperatur. Der aktuelle Unterkühlungsgrad aus dem Baustein f3 wird sodann über eine Signalleitung SL3 dem PID-Baustein PID3 zugeleitet. Der Baustein PID3 bestimmt für die letzte Stufe der mehrstufigen Regelschaltung einen weiteren Sollwert für das Strömungsvolumen des Speisewassers in den HD-Verdampfer 4. Dieser Sollwert wird über die Signalleitung SW4 einem vierten und letzten in der Serie geschalteten PID-Bausteine PID4 zugeführt. Ein Messgerät M4 in der Leitung 14 stellt das bestehende Strömungsvolumen fest, dessen Messwertsignal über eine Signalleitung SL4 dem PID-Baustein PID4 zugeleitet wird. Der Baustein PID4 generiert sodann unter Berücksichtigung von vorbestimmten Mindest- und Maximalwerten für das Strömungsvolumen ein Regelsignal, das über eine Regelsignalleitung RL an ein Ventil 12 in der Zufuhrleitung 14 zum HD-Verdampfer geleitet wird. Die Ventilöffnung wird sodann entsprechend getätigt. Dadurch wird eine optimale Speisewasserzufuhr in den HD-Verdampfer für die gewünschte Dampftemperatur in der Dampfturbine DT sichergestellt. Das durch die Regelschaltung geregelte Ventil 12 kann an beliebiger Stelle in der Speisewasserzufuhrleitung in den Hochdruckverdampfer angeordnet sein, d.h. beispielsweise am Eintritt zum Hochdruckverdampfer und nach dem Hochdruck-Economizer oder auch in der Leitung vor dem Eintritt in den Hochdruck-Economizer.

Eine vereinfachte Variante der Regelschaltung ist mit der Schaltung von Figur 1 identisch mit Ausnahme des Regelbausteins PID4 und der Messvorrichtung zur Messung des Speisewasserströmungsvolumens. Die Variante weist nur drei in Serie geschaltete Regelbausteine auf und eine Regelsignalleitung, die vom Regelbaustein PID3 direkt zum Ventil 12 führt. Anstelle von PID-Regelbausteinen sind, wie vorgängig erwähnt, sowohl in dieser Schaltung als auch in der Schaltung von Figur 1, auch Zustandsregler mit Beobachter einsetzbar.

Bei jeder Regelstufe, d.h. bei jedem PID-Baustein wird jeweils der Sollwert für die nachfolgende Regelstufe generiert, wobei diese unter Berücksichtigung von vorgegebenen Minimal- und Maximalsollwerten bestimmt werden. Bei der Generierung des Sollwertes für den Überhitzungsgrad des Dampfes am Austritt des Hochdruckverdampfers 4, der über Leitung SW2 weitergeleitet wird, ist durch eine untere Limite Min Sh und eine obere Limite Max Sh ein Bereich für den Sollwert festgelegt. Dieser Bereich gewährleistet den optimalen und sicheren Betrieb des Dampferzeugers.

Die untere Limite Min Sh verhindert einen Sättigungszustand (Wasser-DampfGemisch) am Austritt des Hochdruck-Verdampfers. Ein Sättigungszustand am Austritt Hochdruck-Verdampfers würde sonst zu einer Verminderung des Verdampfungsprozesses und zu einer unaufhaltbaren Überhitzung am Austritt des Überhitzers des Dampferzeugers führen.

Die obere Limite Max Sh verhindert eine Überschreitung der Dampftemperatur über der zulässigen Materialtemperatur am Austritt des Hochdruck-Verdampfers. Zusätzlich stellt sie sicher, dass die Überhitzung am Austritt des Hochdruck-Verdampfers die nötige Grenze für einen stabilen Betrieb des Verdampfers nicht überschreitet.

Analog wird durch PID-Baustein PID2 der Sollwert für den Unterkühlungsgrad des Speisewassers am Eintritt in den HD-Verdampfer 4 innerhalb eines Bereichs bestimmt, der durch eine untere Limite MinSc und eine obere Limite Max Sc vorgegebenen ist. Die unter Limite Min Sc verhindert eine Ausdampfung des Speisewassers am Eintritt des Hochdruck-Verdampfers, und stellt damit die Betriebs-Stabilität des Hochdruck-Verdampfers sicher und verhindert einen Verschleiss der Armaturen am Eintritt des Hochdruck-Verdampfers.

Die obere Limite Max Sc verhindert einen zu hohen Unterkühlungsgrad und damit einen unstabilen Betrieb des Verdampfers weit weg vom optimalen Betriebsbereich. Insbesondere gewährleistet diese obere Limite Max Sh eine geeignete Reaktionszeit der Regelung, d.h. eine schnellere Rückkehr in einen optimalen Betriebsbereich.

Ebenfalls wird durch PID-Baustein PID3 der Sollwert für das Strömungsvolumen des Speisewassers in den HD-Verdampfer 4 innerhalb eines Bereichs zwischen Min Fl und Max Fl generiert. Die untere Grenze gewährleistet, dass ein Minimalfluss sichergestellt ist, zum Beispiel im Fall eines Ventilfehlverhaltens. Die obere Grenze stellt ein Strömungsvolumen unterhalb dem maximal möglichen Speisewasserpumpen-Strömungsvolumen sicher.

In einer weiteren Ausführung des erfindungsgemässen Verfahrens wird der Sollwert für die Frischdampftemperatur für die Dampfturbine und die gemessene Dampftemperatur am Austritt aus dem Überhitzer 3 dazu verwendet, ein Regelsignal zu generieren für die Öffnung eines Ventils 15 in einer Zusatzwasserleitung 16. Dieses Zusatzwasser wird sodann in den Überhitzer 3 eingespritzt. Hierzu wird der Sollwert für die Frischdampftemperatur für die Dampfturbine, der durch die Vorrichtung 13 vorgegeben wird, über eine Leitung SW5 einem weiteren PID-Regelbaustein PID5 zugeleitet. Zudem wird der Temperaturmesswert aus dem Messgerät M1 über eine Leitung SL1' ebenfalls dem PID-Baustein PID5 zugeführt. Dieser Baustein PID5 generiert das Regelsignal für die Öffnungsposition eines Ventils 15 in einer Leitung 16 für Zusatzwasser zur Einspritzung in den Dampfüberhitzer 3. Dieses Zusatzwasser ist insbesondere beim Hochfahren der Anlage notwendig, wenn die heissen Abgase aus der Gasturbine den HD-economizer und HD-Verdampfer noch nicht erreicht haben und noch kein Dampf im Überhitzer vorhanden ist.

Das Regelsignal für die Öffnung des Ventils 15 wird weiter zur Generierung eines Maximal-Sollwerts für den Überhitzungsgrad am Austritt aus dem Hochdruck-Verdampfer 4 MaxSh verwendet. Das Ventilregelsignal aus dem PID-Regelbaustein PID5 wird hierzu einem weiteren PID-Baustein PID6 zugeleitet. Dieser generiert aufgrund dieses Ventilsignals den Maximal-Überhitzungsgrad Max Sh, sodass bei steigender Ventilöffnung, d.h. steigendem Zusatzwasservolumen, die obere Grenze MaxSh in der ersten Stufe der mehrstufigen Regelung des Dampferzeugers gesenkt wird.

Die Absenkung des Sollwerts für den Überhitzungsgrad bezweckt eine Erhöhung des Speisewasser-strömungsvolumens für den Hochdruckverdampfer. Damit wird eine übermässige Einspritzung von Zusatzwasser während dem Hochfahren der Anlage verhindert. Dieser Maximalwert Max Sh für den Sollwert des Überhitzungsgrads wird erhöht oder gesenkt um die Empfindlichkeit des Regelbausteins PID1 zu regulieren. Im Fall, dass die Differenz zwischen Mess- und Sollwert für die Dampftemperatur am Austritt aus dem Überhitzer gleich Null ist, wird durch das Signals aus dem Regelbaustein PID5 eine Anpassung des Sollwerts für den Überhitzungsgrad ermöglicht.

Die Einspritzung von Zusatzwasser kann anstelle der Schaltung für die Einspritzung mittels Bausteinen PID5, PID6, den Signalleitungen SW5, SL1', der Wasserleitung 16 und dem Ventil 15 kann auch durch eine sogenannte Exitstage-Einspritzung mit Leitung 18 und Ventil 17 und dazugehörigen Regel-Bausteinen und Signalleitungen realisiert werden. Zudem können auch beide Einspritzschaltungen gleichzeitig eingesetzt werden.

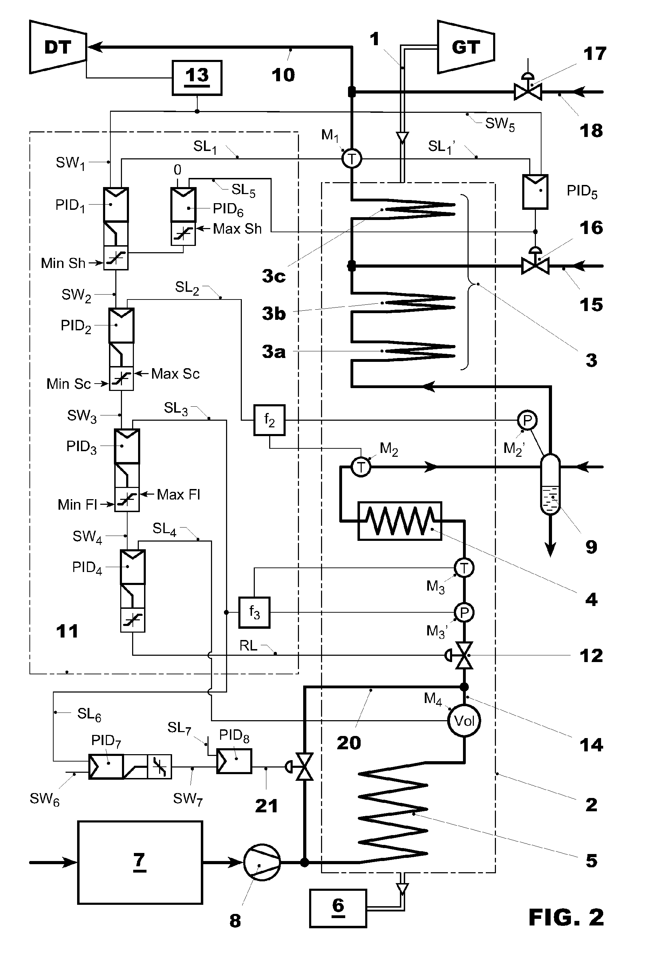

Figur 2 zeigt schematisch die gleiche Kombi-Kraftanlage mit Einrohrdampferzeuger wie in Figur 1 und die gleiche Regelschaltung zur Regelung dieser Anlage wie in Figur 1, jedoch mit zusätzlichen Elementen zur Regelung der Unterkühlung des Strömungsmediums am Eintritt des Hochdruck-Verdampfers, wobei die Anlage zusätzlich eine Bypassleitung 20 aufweist, die vom Austritt aus der Speisewasserpumpe 8 abzweigt und in die Speisewasserleitung 14 des Einrohrdampferzeugers vor dem Eintritt in den Hochdruck-Verdampfer 4 und nach dem Economizer 5 mündet. Figur 2 zeigt die zusätzlichen Schaltungselemente gemäss der vierten Ausführung der Regelschaltung. Insbesondere ist ein Regelbaustein PID7 gezeigt, zu dem eine Signalleitung SL6 und eine Signalleitung SW6 führen, die einen aktuellen Unterkühlungsgrad des Strömungsmediums am Eintritt zum Hochdruck-Verdampfer 4 gemäss Berechnung durch den Rechenbaustein f3 bzw. einen Mindestsollwert für den Unterkühlungsgrad zum Regelbaustein PID7 leiten. Der Mindestsollwert des Unterkühlungsgrads ist insbesondere kleiner als der Mindestsollwert für den Unterkühlungsgrad, der über Leitung SW3 an den Regelbaustein PID3 geleitet wird. Der Baustein PID7 bestimmt aufgrund der Differenz zwischen dem ihm zugeleiteten aktuellen Unterkühlungsgrad und dem Mindestsollwert für den Unterkühlungsgrad einen Sollwert für das Strömungsvolumen durch die Bypassleitung 20. Eine Signalleitung SW7 führt vom Baustein PID7 zu einem weiteren Regelbaustein PID8, dem der bestimmte Strömungsvolumensollwert zugeleitet wird. Eine Signalleitung SL7 führt ebenfalls zu diesem Regelbaustein PID8, über die ein aktueller Wert des Strömungsvolumens durch die Bypassleitung 20 zum Baustein PID8 geleitet wird. Dieser aktuelle Wert des Strömungsvolumens wird, wegen des geringen Druckunterschieds, anstatt durch eine Messung beispielsweise rechnerisch bestimmt mittels einer Energiebilanzrechnung:

$$m_{eco-byp} = m_{eva} \left(h_{eco} - h_{mix}\right) / \left(h_{eco} - h_{fdw-pmp}\right) ,$$

wobei

$m_{eco-byp}$ der Massenstrom durch die Bypassleitung 20,
$m_{eva}$ der Massenstrom durch den Hochdruck-Verdampfer 4,
$h_{eco}$ die Enthalpie des Strömungsmediums im Economizer 5,
$h_{mix}$ die Enthalpie des Strömungsmediums in der Leitung nach der Einmündung der Bypassleitung 20,
$h_{fdw-pmp}$ die Enthalpie des Strömungsmediums bei der Speisewasserpumpe 8 bedeuten.

PID8 generiert aufgrund des Sollwerts für das Strömungsvolumen sowie des berechneten, aktuellen Strömungsvolumens $m_{eco-byp}$ ein Regelsignal für die Öffnungsposition eines Ventils in der Bypassleitung 20. Das Ventilregelsignal wird schliesslich durch eine Signalleitung 21 vom Baustein PID8 an das Ventil in der Bypassleitung 20 übermittelt.

Eine vereinfachte Variante der Regelschaltung ist mit der Schaltung von Figur 2 identisch mit Ausnahme des Regelbausteins PID8 und der Signalleitung für den aktuellen Wert des Strömungsvolumens durch die Bypassleitung. In der Variante führt eine Regelsignalleitung direkt vom Baustein PID7 zum Ventil in der Bypassleitung 20.

Anstelle von PID-Regelbausteinen sind, wie vorgängig erwähnt, sowohl in dieser Schaltung als auch in der Schaltung von Figur 2, auch Zustandsregler mit Beobachter einsetzbar.

Bezugszeichenliste

| GT | Gasturbine |
|----|------------|
| DT | Dampfturbine |
| 1 | Abgasleitung |

| 2 | Abgasdampferzeuger, Abhitzedampferzeuger |
| 3 | Hochdruck-Überhitzer |
| 3a,b,c | Stufen des Hochdruck-Überhitzers 3 |
| 4 | Hochdruck-Dampferzeuger |
| 5 | Hochdruck-Economizer |
| 6 | Kamin |
| 7 | Speisewassertank |
| 8 | Speisewasserpumpe |
| 9 | Separator |
| 10 | Frischdampfleitung |
| 11 | Regelschaltung |
| 12 | Ventil |
| 13 | Vorrichtung zur Eingabe eines Sollwerts für die Turbinendampftemperatur |
| 14 | Speisewasserzufuhrleitung |
| 15 | Ventil |
| 16 | Zusatzwasserleitung |
| 17 | Ventil |
| 18 | Zusatzwasserleitung |
| 20 | Bypassleitung |
| 21 | Signalleitung zu Ventil in Bypassleitung 20 |
| M1, M2, M3, M4; M2', M3' | Messvorrichtungen 1-5 |
| SW1, SW2, SW3, SW4, SW5, S6 | Leitungen zur Übermittlung von Sollwerten |
| SL1-6 | Signalleitungen |
| RL | Regelsignalleitung |
| PID1-8 | Proportional-Integrator-Differentiator-Regelbausteine |
| f2, f3 | Berechnungsbausteine |

**Patentansprüche**

**1.** Verfahren zur Regelung eines Dampferzeugers vom Typ eines Einrohrdampferzeugers (2), der in einer Kombi-Kraftanlage mit einer Dampfturbine (DT) und einer Gasturbine (GT) integrierbar ist, wobei der Dampferzeuger (2) einen HD-economizer (5), einen HD-Verdampfer (4) und mindestens einen Überhitzer (3) umfasst, wobei

eine Öffnung eines Ventils (12) zur Regulierung des Strömungsvolumens in einer Speisewasser-Zufuhrleitung (14) in den Hochdruck-Verdampfer (4) geregelt wird,

**dadurch gekennzeichnet, dass**

die Öffnung des Ventils (12) zur Regulierung des Strömungsvolumens in einer Speisewasser-Zufuhrleitung (14) in den Hochdruck-Verdampfer (4) in Abhängigkeit eines Temperatursollwerts für den Dampf für die Dampfturbine (DT) sowie einer gemessenen Dampftemperatur am Austritt des mindestens einen Überhitzers (3) und mittels mehreren Regelungsstufen (PID1-4) in Serie geregelt wird, wobei bei den Regelungsstufen (PID1-4) die gemessene Dampftemperatur am Austritt des Überhitzers (3), ein Überhitzungsgrad am Austritt des Hochdruck-Verdampfers (4) und ein Unterkühlungsgrad des Speisewassers am Eintritt in den Hochdruck-Verdampfer (4) miteinbezogen wird, wobei

das Verfahren die Schritte umfasst:

- Messung der Dampftemperatur am Austritt des Überhitzers (3),
- in einer ersten Regelstufe, Vergleich der Dampftemperatur mit einem Sollwert für die Turbinendampftemperatur gemäss einem Betriebszustand der Dampfturbine (DT), und Generierung eines Sollwerts für den Überhitzungsgrad am Austritt des Hochdruck-Verdampfers (4) aufgrund der Differenz zwischen dem Messwert und Sollwert der Dampftemperatur am Austritt des Überhitzers (3),
- Messung des aktuellen Überhitzungsgrads am Austritt des Hochdruck-Verdampfers (4),
- in einer zweiten Regelstufe, Generierung eines Sollwerts für den Unterkühlungsgrad des Speisewassers am Eintritt des Hochdruck-Verdampfers (4) aufgrund der Differenz zwischen dem Sollwert und aktuellen Messwert des Überhitzungsgrads am Austritt des Hochdruck-Verdampfers (4),
- Messung des aktuellen Unterkühlungsgrads des Speisewassers am Eintritt in den Hochdruck-Verdampfer (4),
- in einer dritten Regelstufe, Generierung eines Sollwerts für das Strömungsvolumen für das Speisewasser vor dem Hochdruck-Verdampfer (4) aufgrund der Differenz zwischen dem Sollwert und dem aktuellen Messwert für den Unterkühlungsgrad des Speisewassers,
- aufgrund des Sollwerts für das Strömungsvolumen des Speisewassers, Generierung eines Regelsignals für die Öffnung eines Ventils (12) in der Speisewasserzufuhrleitung (14) und Übermittlung an das Ventil (12).

2. Verfahren nach Anspruch 1
**dadurch gekennzeichnet, dass**
zusätzlich nach der Bestimmung des Sollwertes für das Strömungsvolumen des Speisewassers die Schritte durchgeführt werden:

- Messung des aktuellen Strömungsvolumens des Speisewassers in den Hochdruck-Verdampfer (4),
- in einer vierten Regelstufe, Generierung eines Regelsignals für eine Öffnungsposition eines Ventils (12) in einer Speisewasserzufuhrleitung (14) vor dem Hochdruck-Verdampfer (4) aufgrund der Differenz zwischen dem Sollwert für das Strömungsvolumen des Speisewassers und dem aktuellen gemessenen Strömungsvolumen,
- Übermittlung eines Regelsignals für die Öffnung des Ventils (12) in der Speisewasserzufuhrleitung (14).

3. Verfahren nach Anspruch 1 oder 2
**dadurch gekennzeichnet, dass**
der Sollwert für den Überhitzungsgrad am Austritt des Hochdruckverdampfers (4) zwischen vorgegebenen Maximal- und Minimalwerten (Max Sh, Min Sh) bestimmt wird.

4. Verfahren nach Anspruch nach einem der vorangehenden Ansprüche 1-3
**dadurch gekennzeichnet, dass**
der Sollwert für den Unterkühlungsgrad des Speisewassers am Eintritt in den Hochdruckverdampfer (4) zwischen vorgegebenen Maximal- und Minimalwerten (Max Sc, Min Sc) bestimmt wird.

5. Verfahren nach Anspruch nach einem der vorangehenden Ansprüche 1-4
**dadurch gekennzeichnet, dass**
der Sollwert für das Strömungsvolumen zwischen vorgegebenen Maximal- und Minimalwerten (Max Fl, Min Fl) bestimmt wird.

6. Verfahren nach Anspruch einem der vorangehenden Ansprüche
**dadurch gekennzeichnet, dass**
aufgrund der Differenz zwischen dem Sollwert für die Dampftemperatur in der Dampfturbine (DT) und dem Messwert für die Dampftemperatur am Austritt des Überhitzers (3) ein Regelsignal für die Öffnung eines Ventils (15) in einer Zusatzwasserleitung (16) generiert wird und aufgrund dieses Regelsignals über die Zusatzwasserleitung (16) Wasser in den Überhitzer (3) eingespritzt wird.

7. Verfahren nach Anspruch 6
**dadurch gekennzeichnet, dass**
mittels des Regelsignals für die Öffnung des Ventils (15) in der Zusatzwasserleitung (16) ein Maximalsollwert (MaxSh) für den Überhitzungsgrad am Austritt des Hochdruckverdampfers (4) generiert wird und der ersten Regelstufe (PID1) in der mehrstufigen Regelung (11) zugeleitet wird.

8. Verfahren nach einem der vorangehenden Ansprüche 1-7
**dadurch gekennzeichnet, dass**
zusätzlich die Schritte durchgeführt werden:

- Bestimmung eines Soll-Strömungsvolumens durch eine Bypassleitung (20) zwischen dem Austritt der Speisewasserpumpe (8) der Kombi-Kraftanlage und dem Eintritt des Hochdruck-Verdampfers (4) aufgrund der Differenz zwischen dem aktuellen Messwert des Unterkühlungsgrads am Eintritt des Hochdruck-Verdampfers (4) und einem Mindest-Sollwert für die Unterkühlung kleiner als der Mindestsollwert für die Unterkühlung in der dritten Regelstufe;
- aufgrund des Sollwerts für das Strömungsvolumen durch die Bypassleitung, Generierung und Übermittlung eines Regelsignals für die Öffnungsposition eines Ventils in der Bypassleitung (20).

9. Verfahren nach Anspruch 8
**dadurch gekennzeichnet, dass**
das Verfahren zusätzlich den Schritt umfasst:

- Bestimmung des aktuellen Strömungsvolumens in der Bypassleitung (20);
- Generierung eines Regelsignals für die Öffnungsposition eines Ventils in der Bypassleitung (20) aufgrund des Sollwerts für das Strömungsvolumen durch die Bypassleitung (20) und einem aktuellen Strömungsvolumen durch die Bypassleitung (20);
- Übermittlung des Regelsignals für die Position des Ventils in der Bypassleitung.

10. Regelschaltung (11) für die Regelung eines Dampferzeugers vom Typ eines Einrohrdampferzeugers (2), der in einer Kombi-Kraftanlage mit einer Dampfturbine (DT) und einer Gasturbine (GT) integrierbar ist und einen HD-economizer (5), einen HD-Verdampfer (4) und mindestens einen Überhitzer (3) umfasst,
**dadurch gekennzeichnet, dass**
die Regelschaltung (11) folgende Elemente aufweist:

- eine Vorrichtung (13) zur Eingabe eines Sollwerts für eine gewünschte Turbinendampftemperatur sowie eine Vorrichtung (M1) zur Messung einer Dampftemperatur am Austritt des mindestens einen Überhitzers (3),
- eine Vorrichtung (M2, M2', f2) zur Messung und Berechnung des Überhitzungsgrads am Austritt des Hochdruckverdampfers (4),
- eine Vorrichtung (M3, M3', f3) zur Messung und Berechnung des Unterkühlungsgrads des Speisewassers am Eintritt in den Hochdruckverdampfer (4),
- mindestens drei Regelbausteine (PID1-4), die in Serie geschaltet sind,
- Signalleitungen (SL1-3) zur Übermittlung der Messwerte der Dampftemperatur am Austritt aus dem Dampfüberhitzer (3), der Werte des Überhitzungsgrads am Austritt aus dem Hochdruckverdampfer (4) und des Unterkühlungsgrads des Speisewassers am Eintritt in den Hochdruckverdampfer (4) an die Regelbausteine (PID1-3),
- eine Regelsignalleitung (RL) zur Übermittlung eines Regelsignals vom letzten in Serie geschalteten Regelbaustein (PID3, PID4) an ein Ventil (12) in der Zufuhrleitung (14) für das Speisewasser in den Hochdruckverdampfer (4).

11. Regelschaltung nach Anspruch 10
**dadurch gekennzeichnet, dass**
die Regelschaltung (11) zusätzlich folgende Elemente aufweist:

- eine Vorrichtung (M4) zur Messung des Strömungsvolumens des Speisewassers in der Zufuhrleitung (14) in den Hochdruck-Verdampfer (4),
- einen vierten Regelbaustein (PID4), der mit den drei Regelbausteinen (PID1-3) in Serie geschaltet ist,
- eine Signalleitung (SL4) zur Übermittlung des Messwerts für das Strömungsvolumen an den vierten Regelbaustein (PID4)

12. Regelschaltung nach Anspruch 10 oder 11
**dadurch gekennzeichnet, dass**
die Regelschaltung (11) zusätzlich folgende Elemente aufweist:

- einen weiteren Regelbaustein (PID5) zur Bestimmung eines Regelsignals für die Öffnung eines Ventils (17) in einer Zusatzwasserleitung (18) in den Überhitzer (3),
- einen weiteren Regelbaustein (PID6) zur Generierung eines Maximalsollwerts (Max Sh) für den Überhitzungsgrad am Austritt des Hochdruckverdampfers (4),
- eine Signalleitung (SL1') zur Übermittlung des Regelsignals für das Ventil (17) in der Zusatzwasserleitung (18) an den Regelbaustein (PID6) zur Generierung des Maximalsollwerts für den Überhitzungsgrad.

13. Regelschaltung nach einem der vorangehenden Ansprüche 10-12
**dadurch gekennzeichnet, dass**
die Regelbausteine (PID1-4) Proportional-Integrator-Differentiator-Regelbausteine oder Zustandsbausteine mit Beobachter sind.

14. Regelschaltung nach einem der vorangehenden Ansprüche 10 bis 12 **dadurch gekennzeichnet, dass**
die Regelschaltung folgende zusätzlichen Elemente aufweist:

- einen zusätzlichen Regelbaustein (PID7) zur Bestimmung eines Soll-Strömungsvolumens durch eine Bypassleitung (20) zwischen einer Speisewasserpumpe (8) der Kombi-Kraftanlage und dem Eintritt in den Hochdruck-Verdampfer (4) des Einrohrverdampfers (2);
- eine Signalleitung (SL6) zur Übermittlung des aktuellen, gemessenen Unterkühlungsgrad am Eintritt zum Hochdruck-Verdampfer (4) an den zusätzlichen Regelbaustein (PID7);
- eine Signalleitung (21) zur Übermittlung eines Ventilregelsignals an das Ventil in der Bypassleitung (20).

**15.** Regelschaltung nach Anspruch 14
**dadurch gekennzeichnet, dass**
die Regelschaltung folgende zusätzlichen Elemente aufweist:

- einen weiteren Regelbaustein (PID8), der in Serie mit dem Regelbaustein (PID7) zur Bestimmung des Soll-Strömungsvolumens durch die Bypassleitung (20) geschaltet ist;
- eine Signalleitung (SW7) zur Übermittlung des Sollwerts für das Strömungsvolumen durch die Bypassleitung (20) an diesen weiteren Regelbaustein (PID8);
- eine Signalleitung (SL7) zur Übermittlung eines aktuellen Wertes für das Strömungsvolumen durch die Bypassleitung (20) an diesen weiteren Regelbaustein (PID8).


**Claims**

1. Method for controlling a boiler of the single-tube boiler (2) type, which can be integrated in a combined cycle power plant with a steam turbine (DT) and a gas turbine (GT), wherein the boiler (2) comprises an HP economizer (5), an HP evaporator (4) and at least one superheater (3),
wherein
opening of a valve (12) for regulating the flow volume in a feedwater supply line (14) into the high-pressure evaporator (4) is controlled,
**characterized in that**
opening of the valve (12) for regulating the flow volume in a feedwater supply line (14) into the high-pressure evaporator (4) is controlled in dependence upon a temperature set-point value for the steam for the steam turbine (DT) and also upon a measured steam temperature at the outlet of the at least one superheater (3) and by means of a plurality of control steps ($PID_{1-4}$) in series, wherein the measured steam temperature at the outlet of the superheater (3), a degree of superheating at the outlet of the high-pressure evaporator (4) and a degree of subcooling of the feedwater at the inlet into the high-pressure evaporator (4) are integrated in the control steps ($PID_1$ -4),
wherein
the method comprises the steps:

- measuring the steam temperature at the outlet of the superheater (3),
- in a first control step, comparing the steam temperature with a set-point value for the turbine steam temperature according to an operating state of the steam turbine (DT), and generating a set-point value for the degree of superheating at the outlet of the high-pressure evaporator (4), based on the difference between the measured value and set-point value of the steam temperature at the outlet of the superheater (3),
- measuring the current degree of superheating at the outlet of the high-pressure evaporator (4),
- in a second control step, generating a set-point value for the degree of subcooling of the feedwater at the inlet of the high-pressure evaporator (4), based on the difference between the set-point value and current measured value of the degree of superheating at the outlet of the high-pressure evaporator (4),
- measuring the current degree of subcooling of the feedwater at the inlet into the high-pressure evaporator (4),
- in a third control step, generating a set-point value for the flow volume for the feedwater upstream of the high-pressure evaporator (4), based on the difference between the set-point value and the current measured value for the degree of subcooling of the feedwater,
- based on the set-point value for the flow volume of the feedwater, generating a control signal for the opening of a valve (12) in the feedwater supply line (14) and transmitting the control signal to the valve (12).

2. Method according to Claim 1,
**characterized in that**
after determining the set-point value for the flow volume of the feedwater, these steps are additionally carried out:

- measuring the current flow volume of the feedwater into the high-pressure evaporator (4),
- in a fourth control step, generating a control signal for an opening position of a valve (12) in a feedwater supply line (14) upstream of the high-pressure evaporator (4), based on the difference between the set-point value for the flow volume of the feedwater and the current measured flow volume,
- transmitting a control signal for the opening of the valve (12) in the feedwater supply line (14).

**3.** Method according to Claim 1 or 2,
**characterized in that**
the set-point value for the degree of superheating at the outlet of the high-pressure evaporator (4) is determined between specified maximum and minimum values (Max Sh, Min Sh).

**4.** Method according to one of the preceding Claims 1 - 3,
**characterized in that**
the set-point value for the degree of subcooling of the feedwater at the inlet into the high-pressure evaporator (4) is determined between specified maximum and minimum values (Max Sc, Min Sc).

**5.** Method according to one of the preceding Claims 1 - 4,
**characterized in that**
the set-point value for the flow volume is determined between specified maximum and minimum values (Max Fl, Min Fl).

**6.** Method according to one of the preceding claims,
**characterized in that**
based on the difference between the set-point value for the steam temperature in the steam turbine (DT) and the measured value for the steam temperature at the outlet of the superheater (3), a control signal is generated for the opening of a valve (15) in a make-up water line (16) and, based on this control signal, water is injected via the make-up water line (16) into the superheater (3).

**7.** Method according to Claim 6,
**characterized in that**
by means of the control signal for the opening of the valve (15) in the make-up water line (16), a maximum set-point value (Max Sh) for the degree of superheating at the outlet of the high-pressure evaporator (4) is generated and fed to the first control step ($PID_1$) in the multistep control system (11).

**8.** Method according to one of the preceding Claims 1 - 7,
**characterized in that**
these steps are additionally carried out:

- determining a set-point flow volume through a bypass line (20) between the outlet of the feedwater pump (8) of the combined cycle power plant and the inlet of the high-pressure evaporator (4), based on the difference between the current measured value of the degree of subcooling at the inlet of the high-pressure evaporator (4) and a minimum set-point value for the subcooling which is smaller than the minimum set-point value for the subcooling in the third control step;
- based on the set-point value for the flow volume through the bypass line, generating and transmitting a control signal for the opening position of a valve in the bypass line (20).

**9.** Method according to Claim 8,
**characterized in that**
the method additionally comprises the steps:

- determining the current flow volume in the bypass line (20);
- generating a control signal for the opening position of a valve in the bypass line (20), based on the set-point value for the flow volume through the bypass line (20) and a current flow volume through the bypass line (20) ;
- transmitting the control signal for the position of the valve in the bypass line.

**10.** Control circuit (11) for controlling a boiler of the single-tube boiler (2) type, which can be integrated in a combined cycle power plant with a steam turbine (DT) and a gas turbine (GT) and comprises an HP economizer (5), an HP evaporator (4) and at least one superheater (3),
**characterized in that**
the control circuit (11) has the following elements:

- a device (13) for the input of a set-point value for a desired turbine steam temperature, and also a device ($M_1$) for measuring a steam temperature at the outlet of the at least one superheater (3),
- a device ($M_2$, $M_2'$, $f_2$) for measuring and calculating the degree of superheating at the outlet of the high-pressure evaporator (4),
- a device ($M_3$, $M_3'$, $f_3$) for measuring and calculating the degree of subcooling of the feedwater at the inlet into the high-pressure evaporator (4),
- at least three control modules ($PID_{1-4}$) which are connected in series,
- signal lines ($SL_{1-3}$) for transmitting to the control modules ($PID_{1-3}$) the measured values of the steam temperature at the outlet from the steam superheater (3), the values of the degree of superheating at the outlet from the high-pressure evaporator (4), and the values of the degree of subcooling of the feedwater at the inlet into the high-pressure evaporator (4),
- a control signal line (RL) for transmitting a control signal from the last of the series-connected control modules ($PID_3$, $PID_4$) to a valve (12) in the supply line (14) for the feedwater into the high-pressure evaporator (4).

**11.** Control circuit according to Claim 10,
**characterized in that**
the control circuit (11) additionally has the following elements:

- a device ($M_4$) for measuring the flow volume of the feedwater in the supply line (14) into the high-pressure evaporator (4),
- a fourth control module ($PID_4$) which is connected in series to the three control modules ($PID_{1-3}$),
- a signal line ($SL_4$) for transmitting the measured value for the flow volume to the fourth control module ($PID_4$).

**12.** Control circuit according to Claim 10 or 11,
**characterized in that**
the control circuit (11) additionally has the following elements:

- a further control module ($PID_5$) for determining a control signal for the opening of a valve (17) in a make-up water line (18) into the superheater (3),
- a further control module ($PID_6$) for generating a maximum set-point value (Max Sh) for the degree of superheating at the outlet of the high-pressure evaporator (4),
- a signal line ($SL_1'$) for transmitting the control signal for the valve (17) in the make-up water line (18) to the control module ($PID_6$) for generating the maximum set-point value for the degree of superheating.

**13.** Control circuit according to one of the preceding Claims 10 - 12,
**characterized in that**
the control modules ($PID_{1-4}$) are proportional-integrator-differentiator control modules or state modules with monitors.

**14.** Control circuit according to one of the preceding Claims 10 to 12,
**characterized in that**
the control circuit has the following additional elements:

- an additional control module ($PID_7$) for determining a set-point flow volume through a bypass line (20) between a feedwater pump (8) of the combined cycle power plant and the inlet into the high-pressure evaporator (4) of the single-tube boiler (2);
- a signal line ($SL_6$) for transmitting to the additional control module ($PID_7$) the current measured degree of subcooling at the inlet to the high-pressure evaporator (4);
- a signal line (21) for transmitting a valve control signal to the valve in the bypass line (20).

**15.** Control circuit according to Claim 14,
**characterized in that**
the control circuit has the following additional elements:

- a further control module ($PID_8$), which is connected in series to the control module ($PID_7$), for determining the set-point flow volume through the bypass line (20);
- a signal line ($SW_7$) for transmitting to this further control module ($PID_8$) the set-point value for the flow volume through the bypass line (20);

EP 2 255 076 B1

- a signal line (SL$_7$) for transmitting to this further control module (PID$_8$) a current value for the flow volume through the bypass line (20).

**Revendications**

1. Procédé de régulation d'un générateur de vapeur du type d'un générateur de vapeur mono tube (2), qui peut être intégré dans une centrale combinée avec une turbine à vapeur (DT) et une turbine à gaz (GT), dans lequel le générateur de vapeur (2) comprend un économiseur à haute pression (5), un évaporateur à haute pression (4) et au moins un surchauffeur (3),
   dans lequel
   une ouverture d'une soupape (12) est réglée en vue de la régulation du volume d'écoulement dans une conduite d'introduction d'eau d'alimentation (14) dans l'évaporateur à haute pression (4),
   **caractérisé en ce que**
   l'ouverture de la soupape (12) est réglée en série en vue de la régulation du volume d'écoulement dans une conduite d'introduction d'eau d'alimentation (14) dans l'évaporateur à haute pression (4) en fonction d'une valeur de consigne de température pour la vapeur de la turbine à vapeur (DT) ainsi que d'une température de vapeur mesurée à la sortie d'au moins un surchauffeur (3) et au moyen de plusieurs étages de régulation (PID1-4), dans lequel dans les étages de régulation (PID1-4) la température de vapeur mesurée à la sortie du sur chauffeur (3), un degré de surchauffe à la sortie de l'évaporateur à haute pression (4) et un degré de sur refroidissement de l'eau d'alimentation à l'entrée de l'évaporateur à haute pression (4) sont pris en considération,
   dans lequel
   le procédé comprend les étapes de :

      - mesure de la température de vapeur à la sortie du sur chauffeur (3),
      - dans un premier étage de régulation, comparaison de la température de vapeur avec une valeur de consigne pour la température de vapeur de turbine selon un état de fonctionnement de la turbine à vapeur (DT), et génération de valeur de consigne pour le degré de surchauffe à la sortie de l'évaporateur à haute pression (4) sur la base de la différence entre la valeur de mesure et la valeur de consigne de la température de vapeur à la sortie du sur chauffeur (3),
      - mesure du degré de surchauffe actuelle à la sortie de l'évaporateur à haute pression (4),
      - dans un deuxième étage de régulation, génération d'une valeur de consigne pour le degré de sur refroidissement de l'eau d'alimentation à l'entrée de l'évaporateur à haute pression (4) sur la base de la différence entre la valeur de consigne et la valeur de mesures actuelle du degré de surchauffe à la sortie de l'évaporateur à haute pression (4),
      - mesure du degré de sur refroidissement actuel de l'eau d'alimentation à l'entrée de l'évaporateur à haute pression (4),
      - dans un troisième étage de régulation, génération d'une valeur de consigne pour le volume d'écoulement pour l'eau d'alimentation avant l'évaporateur à haute pression (4) sur la base de la différence entre la valeur de consigne et la valeur de mesure actuelle pour le degré de sur refroidissement de l'eau d'alimentation,
      - sur la base de la valeur de consigne pour le volume d'écoulement de l'eau d'alimentation, génération d'un signal de régulation pour l'ouverture d'une soupape (12) d'eau d'alimentation (14) et transmission à la soupape (12).

2. Procédé selon la revendication, **caractérisée en ce que** en outre après la détermination de la valeur de consigne pour le volume d'écoulement de l'eau d'alimentation sont effectuées les étapes de :

      - mesure du volume d'écoulement actuel de l'eau d'alimentation dans l'évaporateur à haute pression (4),
      - dans un quatrième étage de régulation, génération d'un signal de régulation pour une position d'ouverture d'une soupape (12) dans une conduite d'introduction d'eau d'alimentation (14) avant l'évaporateur à haute pression (4) sur la base de la différence entre la valeur de consigne pour le volume écoulement de l'eau d'alimentation et le volume d'écoulement mesuré actuel,
      - transmission d'un signal de régulation pour l'ouverture de la soupape (12) dans la conduite d'introduction d'eau d'alimentation (14).

3. Procédé selon la revendication 1 ou 2, **caractérisé en ce que** la valeur de consigne pour le degré de surchauffe à la sortie de l'évaporateur à haute pression (4) est déterminée entre des valeurs maximale set des valeurs minimales prescrites (Max Sh, Min Sh).

**4.** Procédé selon une des revendications précédentes 1-3, **caractérisé en ce que** la valeur de consigne pour le degré de sur refroidissement de l'eau d'alimentation à l'entrée de l'évaporateur à haute pression (4) est déterminée entre des valeurs maximale set des valeurs minimales prescrites (Max Sc, Min Sc).

**5.** Procédé selon une des revendications précédentes 1-4, **caractérisé en ce que** le volume d'écoulement est déterminée entre des valeurs maximale set des valeurs minimales prescrites (Max Fl, Min Fl).

**6.** Procédé selon une des revendications précédentes, **caractérisé en ce que** sur la base de la différence entre la valeur de consigne pour la température de la vapeur dans la turbine à vapeur (DT) et la valeur de mesure pour la température de la vapeur à la sortie du sur chauffeur (3) un signal de régulation pour l'ouverture d'une soupape (15) est générée dans une conduite d'eau d'appoint (16) et un sur la base de ce signal de régulation concernant la conduite d'eau d'appoint (16), de l'eau est injectée dans le sur chauffeur (3).

**7.** Procédé selon la revendication 6, **caractérisé en ce que** au moyen du signal de régulation pour l'ouverture de la soupape (15) dans la conduite d'eau d'appoint (16) une valeur de consigne maximale (MaxSh) pour le degré de surchauffe à la sortie de l'évaporateur à haute pression (4) est générée et le premier étage de régulation (PID1) est terminée dans la régulation à plusieurs étages (11).

**8.** Procédé selon une des revendications précédentes 1-7, **caractérisé en ce que** sont en outre effectuées les étapes de :

- détermination d'un volume d'écoulement de consigne à travers une conduite de dérivation (20) entre la sortie de la pompe d'eau d'alimentation (8) de la centrale combinée et l'entrée de l'évaporateur à haute pression (4) sur la base de la différence entre la valeur de mesure actuelle du degré de sur refroidissement à l'entrée de l'évaporateur à haute pression (4) et une valeur de consigne minimale pour le sur refroidissement inférieure à la valeur de consigne minimale pour le sur refroidissement dans le troisième étage de régulation ;
- sur la base de la valeur de consigne pour le volume d'écoulement à travers la conduite de dérivation, génération et transmission d'un signal de régulation pour la position d'ouverture d'une soupape dans la conduite de dérivation (20).

**9.** Procédé selon la revendication 8, **caractérisé en ce que** le procédé comprend en outre les étapes de :

- détermination du volume d'écoulement actuel dans la conduite de dérivation (20) ;
- génération d'un signal de régulation pour la position d'ouverture d'une soupape dans la conduite de dérivation (20) sur la base de la valeur de consigne pour le volume d'écoulement à travers la conduite de dérivation (20) et d'un volume d'écoulement actuel à travers la conduite de dérivation (20) ;
- transmission du signal de régulation pour la position de la soupape dans la conduite de dérivation.

**10.** Circuit de régulation (11) pour la régulation d'un générateur de vapeur du type d'un générateur de vapeur mono tube (2), qui peut être intégré dans une centrale combinée avec une turbine à vapeur (DT) et une turbine à gaz (GT), dans lequel le générateur de vapeur comprend un économiseur à haute pression (5), un évaporateur à haute pression (4) et au moins un surchauffeur (3),
**caractérisé en ce que**
le circuit de régulation (11) présente les éléments suivants :

- un dispositif (13) pour entrer une valeur de consigne pour une température de vapeur de turbine souhaitée ainsi qu'un dispositif (M1) de mesure d'une température de vapeur à la sortie au moins un sur chauffeur (3),
- un dispositif (M2, M2', f2) de mesure et calcul du degré de surchauffe à la sortie de l'évaporateur à haute pression (4),
- un dispositif (M3,M3',f3) de mesure et calcul du degré de sur refroidissement de l'eau d'alimentation à l'entrée de l'évaporateur à haute pression (4),
- au moins trois modules de régulation (PID1-4) qui sont branchés en série,
- des lignes de signaux (SL1-3) pour transmettre les valeurs de mesure de la température de vapeur à la sortie du sur chauffeur de vapeur (3), les valeurs de degré de surchauffe à la sortie de l'évaporateur à haute pression (4) et du degré de sur refroidissement de l'eau d'alimentation à l'entrée de l'évaporateur à haute pression (4) aux modules de régulation (PID1-3),
- une ligne de signaux de régulation (RL) pour transmettre un signal de régulation du dernier module de régulation branché en série (PID3, PID4) à une soupape (12) dans la conduite d'introduction (14) pour l'eau d'alimentation dans l'évaporateur à haute pression (4).

**11.** Circuit de régulation selon la revendication 10, **caractérisé en ce que** le circuit de régulation (11) présente en outre les éléments suivants :

- un dispositif (M4) de mesure du volume d'écoulement de l'alimentation dans la conduite d'introduction (14) dans l'évaporateur à haute pression (4),
- un quatrième module de régulation (PID4), qui est branché en série avec les trois modules de régulation (PID1-3),
- une ligne de signaux (SL4) pour transmettre la valeur de mesure pour le volume d'écoulement au quatrième module de régulation (PID4).

**12.** Circuit de régulation selon la revendication 10 ou 11, **caractérisé en ce que** le circuit de régulation (11) présente en outre les éléments suivants :

- un module de régulation supplémentaire (PID5) pour déterminer un signal de régulation pour l'ouverture d'une soupape (17) dans une conduite d'eau d'appoint (18) dans le sur chauffeur (3),
- un module de régulation supplémentaire (PID6) pour générer une valeur de consigne maximale (Max Sh) pour le degré de surchauffe à la sortie de l'évaporateur à haute pression (4),
- une ligne de signaux (SL1') pour transmettre le signal de régulation pour la soupape (17) dans la conduite d'eau d'appoint (18) au module de régulation (PID6) pour générer la valeur de consigne maximale pour le degré de surchauffe.

**13.** Circuit de régulation selon une des revendications précédentes 10-12, **caractérisée en ce que** les modules de régulation (PID1-4) sont des modules de régulation de différenciateurs-intégrateurs proportionnels ou des modules d'état avec observateur.

**14.** Circuit de régulation selon une des revendications précédentes 10 à 12, **caractérisé en ce que** le le circuit de régulation présente des éléments supplémentaires suivants :

- un module de régulation supplémentaire (PID7) pour déterminer un volume d'écoulement de consigne à travers une conduite de dérivation (20) entre une pompe d'eau d'alimentation (8) de la centrale combinée et l'entrée de l'évaporateur à haute pression (4) du générateur de vapeur mono tube (2);
- une ligne de signaux (SL6) pour transmettre le degré de sur refroidissement mesuré actuel à l'entrée de l'évaporateur à haute pression (4) au module de régulation supplémentaire (PID7);
- une ligne de signaux (21) pour transmettre via le de régulation de soupape à la soupape dans la conduite de dérivation (20).

**15.** Circuit de régulation selon la revendication 14, **caractérisé en ce que** le circuit de régulation présente les éléments supplémentaires suivants:

- un module de régulation supplémentaire (PID8), qui est branché en série avec le module de régulation (PID7) pour déterminer le volume d'écoulement de consigne à travers la conduite de dérivation (20);
- une ligne de signaux (SW7) pour transmettre la valeur de consigne pour le volume d'écoulement à travers la conduite de dérivation (20) à ce module de régulation supplémentaire (PID8);
- une ligne de signaux (SL7) pour transmettre une valeur actuelle pour le volume d'écoulement à travers la conduite de dérivation (20) à ce module de régulation supplémentaire (PID8).

**FIG. 1**

**FIG. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006107315 A
- WO 2002101292 A
- EP 425717 A
- US 5293842 A
- US 3260246 A